# EUROPEAN PATENT APPLICATION

(11) **EP 4 782 318 A1**
(43) Date of publication of application: **29.07.2026**
(21) Application number: 25208036.1
(22) Date of filing: 10.10.2025
(51) Int. Cl.: B63B 1/24, B63B 1/28, B63B 1/30, B63B 39/06

(54) **VESSEL AND METHOD OF OPERATING VESSEL FOR MARINE OPERATIONS**

(30) Priority: 24.01.2025 NO 20250094
(71) Applicant: Proxflyer AS, 1360 Fornebu (NO)
(72) Inventor: MUREN, Petter, N-1360 Fornebu (NO)
(74) Representative: Acapo Onsagers AS

(57) **Abstract**

The present invention relates to a Stabilized Quadruple-Mode Vessel designed for versatile marine operations, offering seamless transitions between surface, foiling, submerged, and retracted modes. The vessel comprises a lightweight hull with integrated scoop elements for thrust redirection, fully submerged hydrofoils narrower than half the vessel width, and a stabilization system utilizing sensors and servos for dynamic control. The foil assemblies pivot aft to reduce draft, enabling efficient operation in shallow waters and enhanced docking compatibility. Key features include air and water vents for buoyancy control, release mechanisms for collision protection, and precise yaw control via adjustable foil configurations. The invention provides a robust, adaptable, and efficient solution for high-speed surface travel, covert underwater missions, and shallow water navigation, addressing the limitations of conventional hydrofoil systems with advanced mechanical and control innovations

## Description

### Technical field

The present application relates to a vessel for marine operations, specifically a vessel capable of operating both on, above and below the water surface. It addresses limitations of conventional hydrofoil designs by employing a novel retractable foil assembly configuration as well as simplified buoyancy control combined with advanced stabilization and control systems.

### Background

Hydrofoil technology is used to enhance the speed and stability of watercraft by lifting the hull above the water's surface (foiling), thereby reducing drag (force slowing down the vessel). Conventional hydrofoils predominantly utilized V-shaped foils due to their self-stabilizing properties. However, such designs have relatively high drag and compromise lift-efficiency and adaptability.

While T-, L- and U-shaped hydrofoil assemblies, described as fully submerged hydrofoils, offer superior lift characteristics and much lower drag, they are inherently unstable and require active stabilization. The current state of the art lacks a simple mechanical implementation for this kind of foils, that offer a balance between lift performance, robustness and adaptability. Such solutions require innovative foil control mechanisms to ensure operational efficiency and reliability.

Self-stabilizing hydrofoil systems were envisioned more than 100 years ago. A ladder configuration, where several smaller foils are stacked on top of each other were suggested by the inventor Alexander Graham Bell in e.g. GB163035A and later V-shaped hydrofoils were described by e.g. Erlykin in US3693570. For stability control both these inventions rely on reduced lift as the hydrofoils raises out of the water and less foil area is submerged and contributing to the vertical lift. Both configurations, however, suffer from the fact that they create much more drag than one single submerged foil. In the case of V-foils, the lifting surfaces of the foil pierces the water-surface and creates more waves than assemblies with one or two vertical stuts (with no lift). The lift on each side of the V-shaped foil is perpendicular to the foil area - hence a substantial part, the horizontal component, of the left-side lift, directly oppose a similar horizontal component of the right-side lift and do not contribute to any vertical lift - only increased drag.

To overcome the problem of increased drag that does not contribute to vertical lift, later hydrofoil vessels have started to use fully submerged L-shaped or T-shaped hydrofoils and in some applications also U-shaped foil assemblies. One example is the solution suggested by Hasselskog in SE544119 where a U-shaped foil assembly with additional foil area protruding outside the U-shape of the foil assembly is described. This solution relies on mechanical joints and hinges in the struts (the vertical parts of the U-shape) that changes the lifting angle of the left-side and right-side independently by means of twisting the foil, to control the attitude of the vessel. This is not the most efficient way of controlling roll movements, hence the need for additional foil area protruding out to the sides. This solution is also mechanically relatively complex. All fully submerged hydrofoil systems require advanced electronic control systems to remain stable, but with modern electronic flight control systems readily available, the benefits are huge.

Hydrofoils may, however, introduce challenges in boat handling. When docking, hydrofoils protruding outside the beam (width) of the vessel can easily interfere with normal operation and would prevent mooring at docks built for traditional yachts. In shallow waters the draft may be a problem. Hydrofoils in their normal deployed position substantively increases the draft when the vessel is not foiling, and this makes operations close to the shoreline difficult.

To try to overcome these challenges, smaller hydrofoil equipped vessels typically have the ability to retract the foils vertically. This reduces the draft but sees the struts (the vertical part of the foil assemblies) protruding high above the deck, interfering with normal use of the vessel. Mono-hull sailing yachts used for regattas (e.g. foiling Americas Cup yachts) have main foil assemblies that pivots out to the side. This gets the foils out of the water but severely limits the handling of the vessel in ports.

In US6782839, Nozaki describes a single U-shaped foil assembly protruding from side to side over the whole with of the vessel. The foil assembly can swing back into a groove cutting through the bottom of the hull, substantively compromising the hull structure. To be able to operate in this mode the vessel described by Nozaki rely on a traditional sterndrive propulsion system that greatly reduces the vessels' ability to utilise the hydrofoil efficiently.

None of the inventions described above includes a vessel capable of underwater operations, that in some applications (e.g. military covert operations) could be very desirable. All hydrofoil vessels will typically benefit from having a lightweight hull with good buoyancy, the opposite of what a vessel for submerged operations normally would require. One way of reducing the amount of complicated ballast systems to allow underwater operations, is to allow flow of water into the hull in order to reduce the buoyancy. The Shadow Seal, a small underwater vessel from the company JFD Ltd, utilize this principle together with actively controlled ballast tanks, but has no significant capabilities in high-speed operations.

To overcome the limitations described above, the current invention suggests new solutions to both simplify and improve the capabilities of a vessel for marine operations - a vessel capable of operating both on, above and below the water surface as well as in shallow waters.

Exemplary prior art documents include CN117002706A, US20240246645A1, US3149600A.

### Summary

In view of the above, an object according to embodiments of the present application is to overcome or at least mitigate drawbacks of prior art.

In a first aspect, a vessel for marine operations is provided, comprising one or more hulls having integrated scoop-element(s) to redirect thrust, one or more propulsion motors for generating thrust, a plurality of fully submerged hydrofoils arranged in foil assemblies with widths less than half the vessel width, capable of dynamic lift adjustments for attitude control, a stabilization system including sensors and servos for real-time foil angle adjustments, wherein the foil assemblies are configured to pivot aft, reducing draft and enabling thrust redirection via the scoop elements, wherein the vessel is operable in three distinct modes: a surface mode with extended foils at variable speeds, a foiling mode, foiling above the water surface, sustained by lift generated by the hydrofoils with the hull lifted above the water, a retracted mode, with the foil assemblies pivoted aft and where thrust is redirected by the scoop-element(s).

In a second aspect, a method of operating a vessel for marine operations corresponding to the vessel of the first aspect is also provided.

### Brief description of the drawings

Figure 1: Overview of an Unmanned Sub-Surface Foiling Vessel showing the hull with foil assemblies in a retracted position.

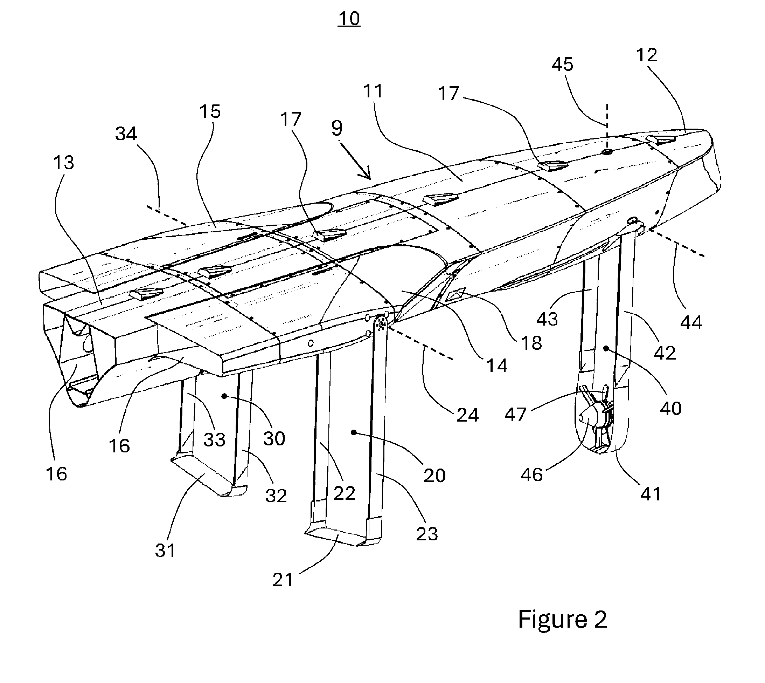

Figure 2: Overview of an Unmanned Sub-Surface Foiling Vessel showing the hull and foil assemblies in a general operational context with extended foils.
Figure 3: Close-up perspective view with the deck removed, showing a servo and their connections to the hydrofoil assemblies for dynamic angle adjustments of the foils, as well as the IMU and sensors for the control system.

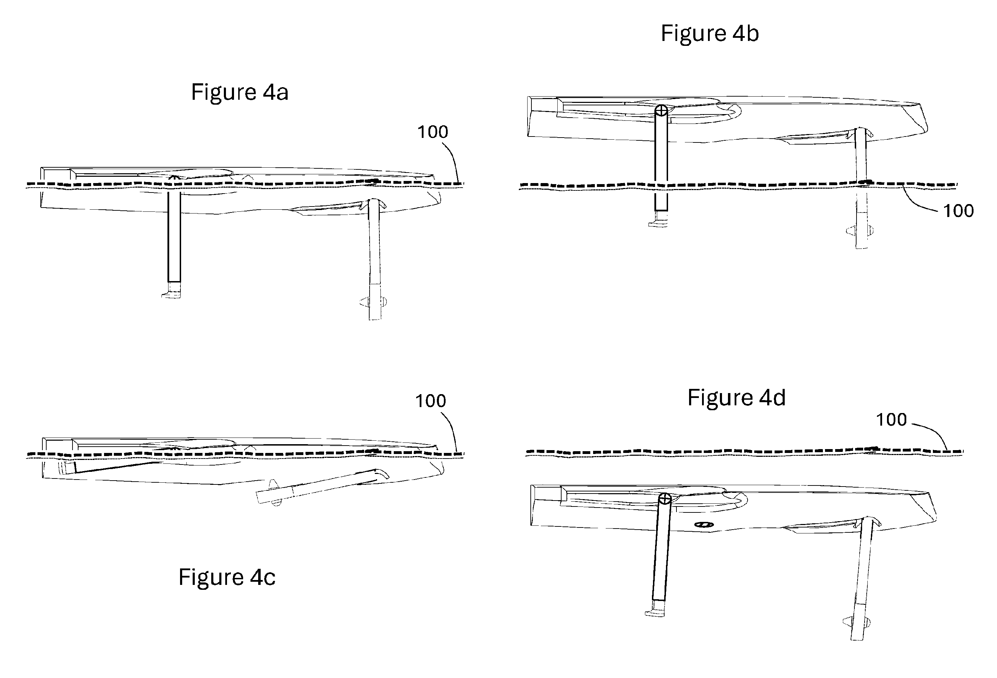

Figure 4a: Illustration of the vessel in surface mode, showing the hull partially submerged in water.
Figure 4b: Illustration of the vessel in foiling mode with the hull lifted above the water surface by the hydrofoils.
Figure 4c: Illustration of the vessel in retracted mode with the foil assemblies pivoted back and the hull partially submerged in water.
Figure 4d: Illustration of the vessel in submerged mode, with the hull fully submerged below the water surface.
Figure 5a-5b: Show the movement of the foils to control roll or sideways stability.
Figure 6: Show the movement of the front foil and motor/propeller to control yaw or travelling direction.
Figure 7a-7d: Show movements of the foils to control the attitude of the vessel in foiling mode. 7a - shows foil positions for pitch down, 7b - pitch up, 7c - increased lift to fly higher and 7d decreased lift to fly lower.

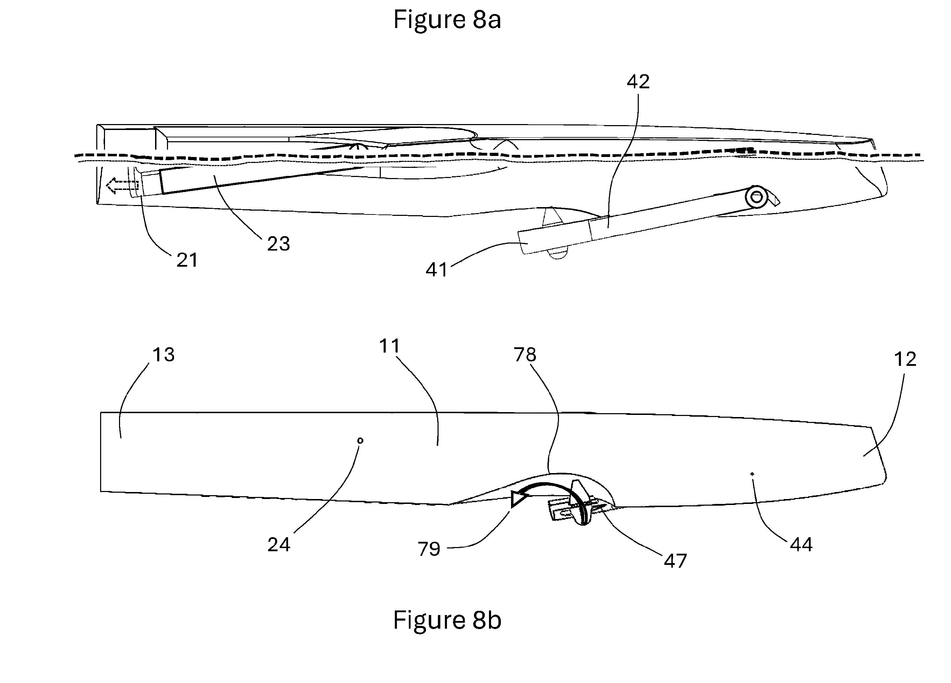

Figure 8a: Side view of the vessel with the foil assemblies retracted and the right foil assembly slightly dropped to yaw right.
Figure 8b: A cut-through view of the vessel showing the center scoop and how the water flow from the thruster/propeller is deflected aft wards to propel the vessel forward.

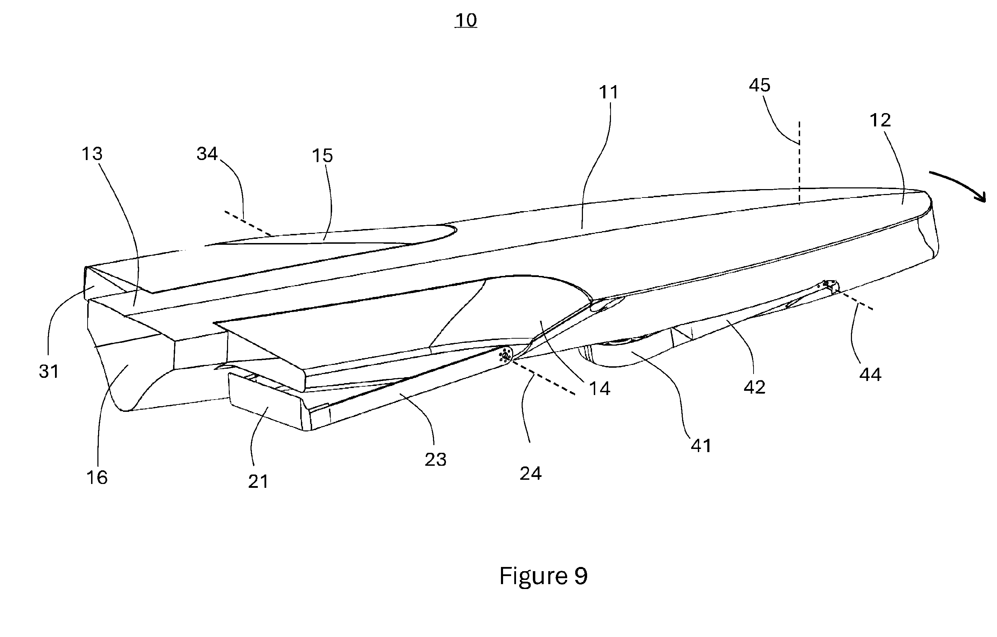

Figure 9: Perspective view of the vessel with foil assemblies in a retracted position and right foil slightly dropped to yaw right.

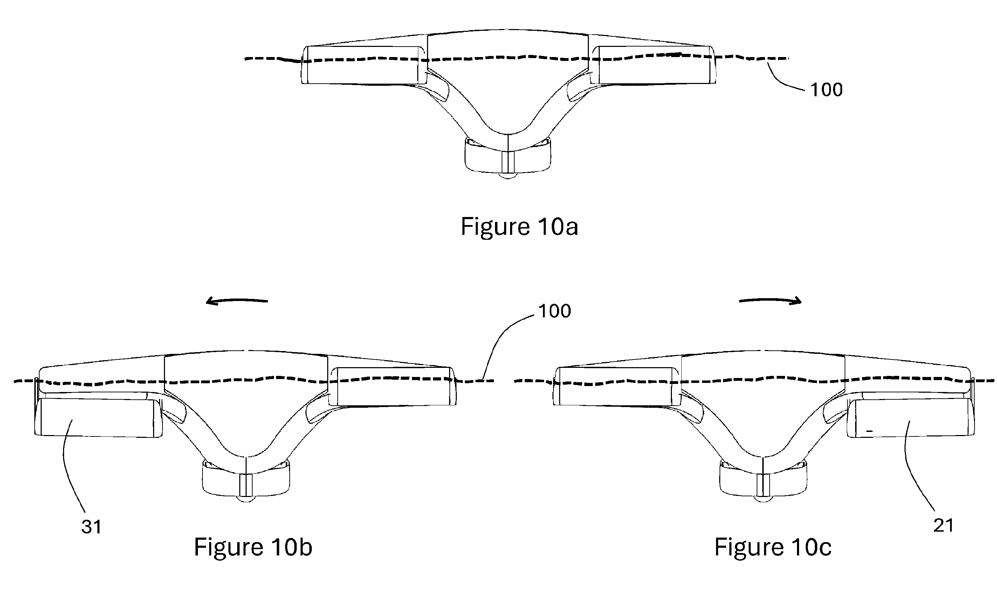

Figure 10a: The vessel seen from behind with both main foils fully retracted.
Figure 10b: The vessel seen from behind with right foil assembly fully retracted and the left foil assembly slightly dropped to yaw left.
Figure 10c: The vessel seen from behind with left foil assembly fully retracted and the right foil assembly slightly dropped to yaw right.

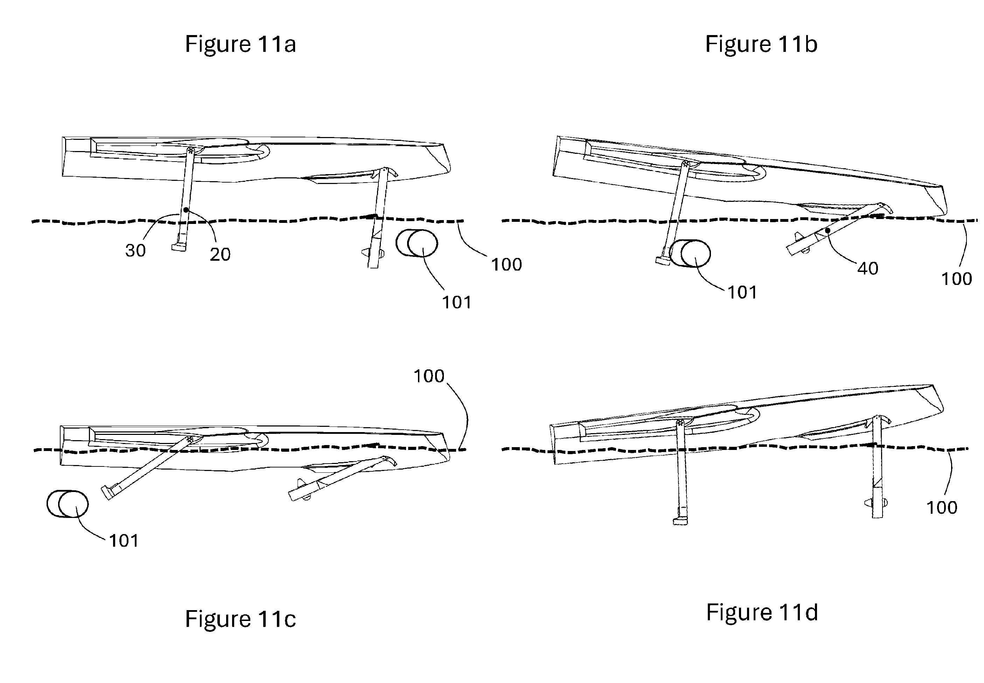

Figure 11: Showing a sequence of events (from 11a to 11d) of the vessel hitting an object in the water and getting back up on the foils again. The foil assemblies all have release mechanisms that allow them to pivot back.
Figure 12: Showing a sequence of events (from 12b to 12g) of the right foil assembly (shown in 12a) going through the steps in the release mechanism and how it is reset and the foil assembly brought back to normal position for foiling.
Figure 13a-13b: Illustrations of water and air flow through the passive water and air vents during transitions. 13a shows the inward air flow and outward water flow during the transition from surface to foiling mode and 13b shows inward water flow and outward air flow during the transition to submerged mode.
Figure 14a: Showing an alternative embodiment of the present solution with two main foil assemblies in the front part of the vessel and a single tail foil with the thruster/propeller near the aft end, with the foil assemblies fully retracted.
Figure 14b: Showing the alternative embodiment with the foil assemblies in foiling mode.
Figure 15a-15d: Depiction of different foil configurations with a hull design having an open back end, and water and air vents, facilitating efficient air and water exchange during operation.

### Detailed description

According to embodiments of the present application as disclosed herein, the above-mentioned disadvantages of solutions according to prior art are eliminated or at least mitigated.

Embodiments of the present invention overcome the shortcomings of prior art by introducing a Stabilized Quadruple-Mode Vessel configured for versatile marine operations, capable of transitioning seamlessly between surface, foiling, submerged, and retracted modes. The inventive features ensure enhanced operational efficiency, stability, and adaptability in various water conditions while overcoming limitations of conventional hydrofoil systems. Below, the structural and functional elements are described in detail, with reference to the accompanying figures.

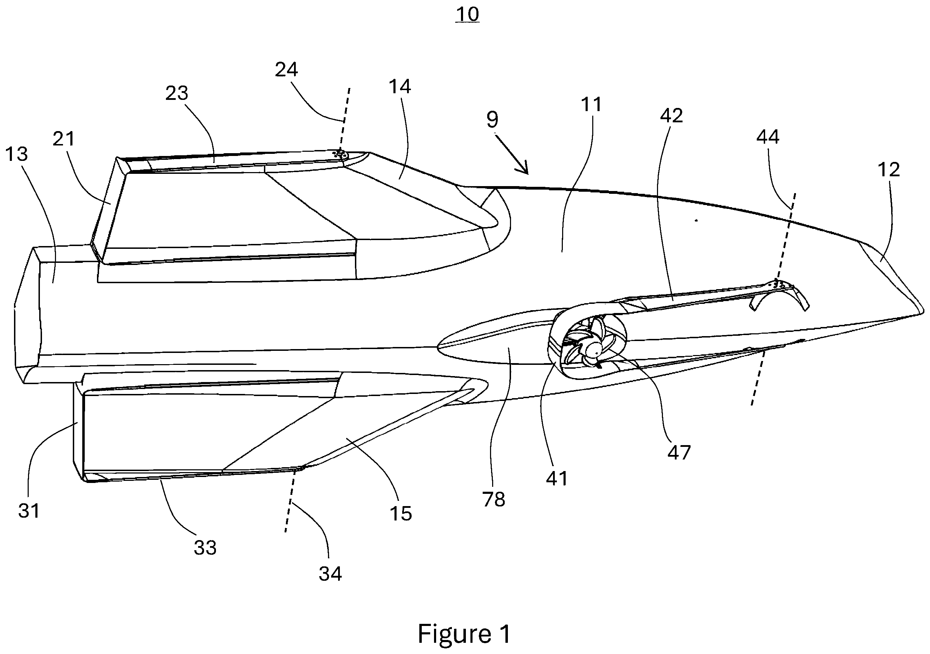

The vessel, according to some embodiments of the present application as illustrated in figure 1, comprises a vessel body (9) including a lightweight Hull (11) incorporating a Center Scoop (78) designed to direct water flow from the propeller (47) or thruster towards the aft for propulsion, particularly when the foil assemblies are retracted.

The vessel may further comprise the following main structural components:
The Hull (11) has a streamlined design to minimize drag and improve hydrodynamics while the forward section of the hull includes a Front End (12). The rear section includes a Back End (13) equipped with an Open Back End (16) to facilitate the exchange of water and air during transitions between foiling, surface and submerged states. Sides (14, 15) comprise the Right- and Left sides of the Hull, supporting the foil assemblies and associated mechanisms.

Further, the vessel may be sustained by three or more U-, T- or L-formed foil assemblies in foiling mode. In the case of one embodiment of the present application, three U-shaped foil assemblies are used: The Right Foil Assembly (20) comprising a Right Foil (21) connected to a Right Foil Tilting Shaft (25) via a Right Inner Strut (22) and a Right Outer Strut (23). The foil assembly pivots (tilts) along a Right Foil Tilting axis (24). The Left Foil Assembly (30) would be structurally identical to the right assembly, with a Left Foil (31), Inner Strut (32), Outer Strut (33), Tilting Axis (34), and Tilting Shaft (35).

The Front Foil Assembly (40) features a Front foil (41) supported by Front Right Strut (42) and Front Left Strut (43). The assembly tilts along a Front Foil Tilting Axis (44), with rotational adjustments managed through the Front Foil Rotation Axis (45).

These foil assemblies are controlled by Servos (54) which drive the angle-adjustments essential for stabilizing the vessel and facilitating its movements. To increase robustness and make the assemblies as mechanically simple as possible there are no moving parts, hinges or links inside the assemblies but the whole assemblies are tilted and rotated about their respective tilting and rotating axis.

In this embodiment of the present application, a Motor (46) and a Propeller (47) are located at the Front Foil Assembly (40) and provide forward propulsion. The motor's power is dynamically adjusted to increase or decrease the propeller thrust based on the desired speed and navigation requirements.

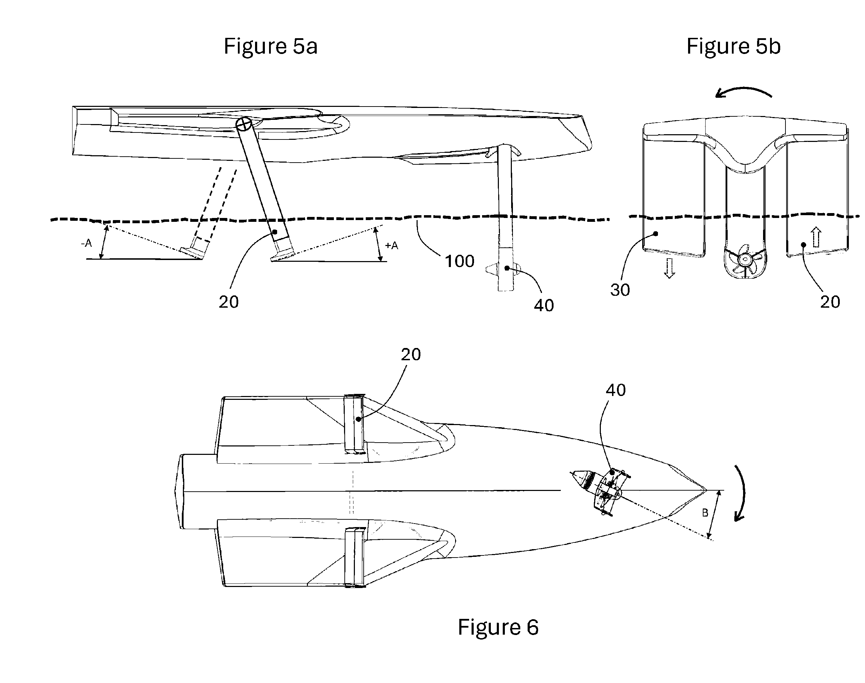

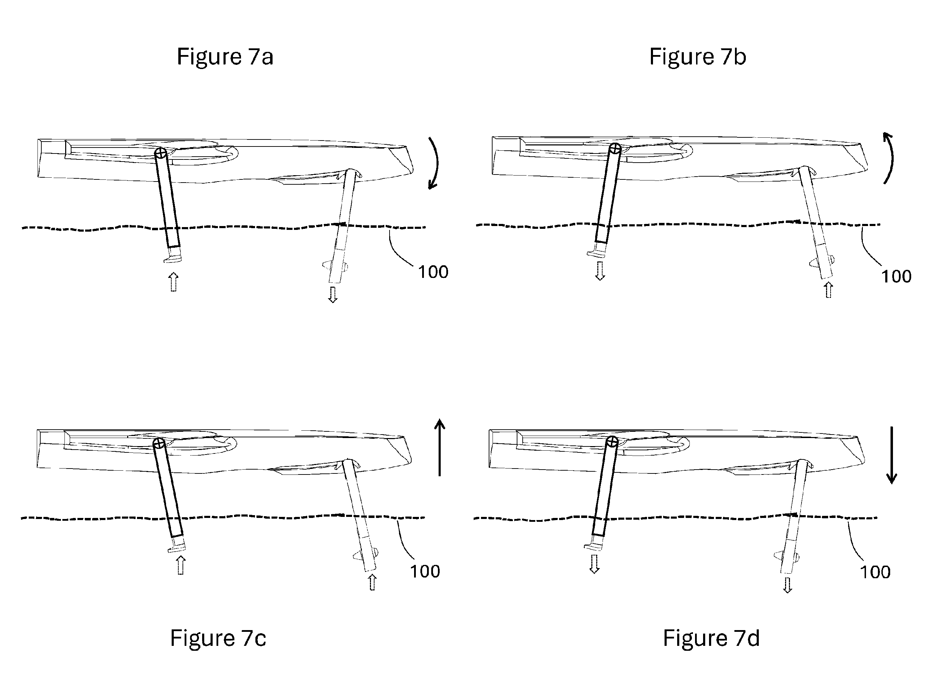

Further, an Active Stabilization System employs sophisticated stabilization software to counteract the inherent instability of fully submerged foils. The stabilization system may include an IMU (50) with accelerometers, gyroscopes and a compass, Height Sensors (51), Depth Sensor (53) and the Servos (54), in addition an optional GPS unit to provide real-time position input for dynamic control and long-term navigation may be included. The stabilization software adjusts the angles of the foils to maintain equilibrium and optimize performance. Figures 5, 6 and 7 show how adjusting the angle of the foil assemblies (20, 30, 40) about their respective tilting axis (24, 34, 44) alters the lift from the foils to control roll, pitch and foiling height above the surface while rotating the Front Foil Assembly (40) about its Front Foil Rotation Axis (45) controls yaw.

The IMU (50) may be an inertial measurement unit that continuously monitors the vessel's orientation. The Height Sensors (51) detect the distance from the water surface (100) using radar or ultrasonic signals. The Depth Sensor (53) will monitor the depth of the vessel during submerged operation by measuring the water pressure.

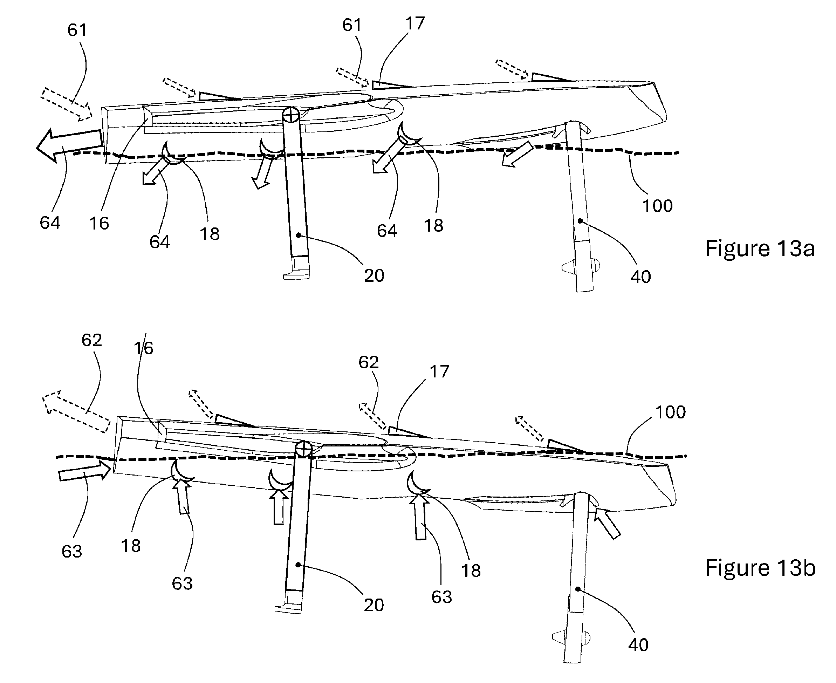

According to some embodiments of the present application, the vessel transitions between surface and submerged operation by filling and draining water from the hull. This is shown in Figures 13a and 13b.

Open Air Vents (17) with no moving mechanical parts facilitate the inflow and outflow of air (inward air flow (61) and outward air flow (62)) to manage buoyancy.

Open Water Vents (18) with no moving mechanical parts passively control the intake (Inward Water Flow (63)) and discharge (Outward Water Flow (64)) of water to enable controlled submersion and resurfacing. The shape of the vents contributes to effectively draining water out of the hull as the speed in surface mode increases.

During transition to submerged mode, water flows in through the Vents (18), reducing buoyancy. The speed is low, the Front End (12) is pitched down, and the foil angles are adjusted to create downward force. To transition into foiling mode, the process is reversed, with water expelled and the foils adjusted to provide upward lift. The flow of water and air is controlled by the speed and attitude of the vessel.

An important addition to the air and water vents is the Open Back End (16) of the vessel. Furthermore, the Air (17) and Water Vents (18) are positioned at critical areas to prevent air or water from being trapped inside the vessel during transitions. The Open Back End (16) and the Air (17) and Water Vents (18) work in tandem with the foil-adjustments to maintain stability and buoyancy.

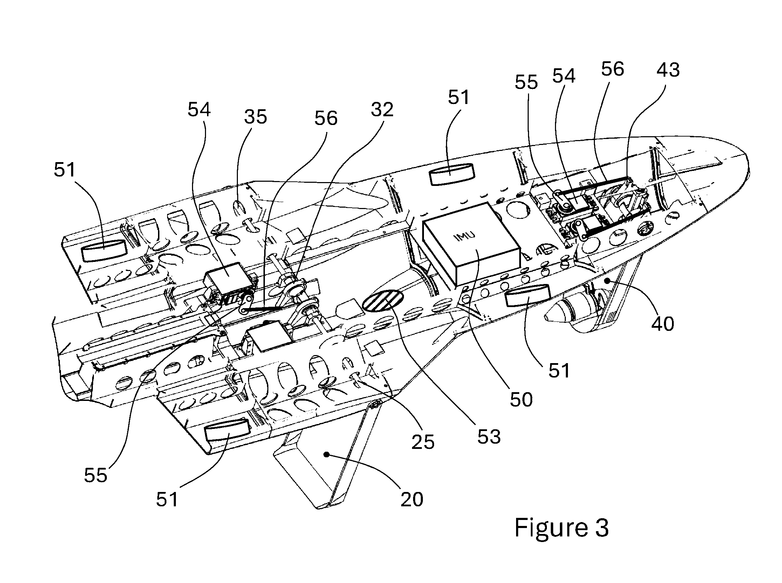

Further as illustrated in Figure 3, which is a close-up perspective view with the deck removed, showing a the Servos (54) and their connections (55, 56) to the hydrofoil assemblies for dynamic angle adjustments of the foils, as well as the IMU (50) and sensors for the control system, the Foil Assemblies (20, 30, 40) are mechanically linked to the Servos (54) through Servo Arms (55) and Servo Links (56), enabling precise movement based on real-time input from the IMU (50) and Sensors (51, 53). The Motor (46) and Propeller (47) ensure propulsion and directional control, while the stabilization system coordinates the entire operation to achieve stability and smooth transitions between surface, Foiling, Retracted and Submerged modes.

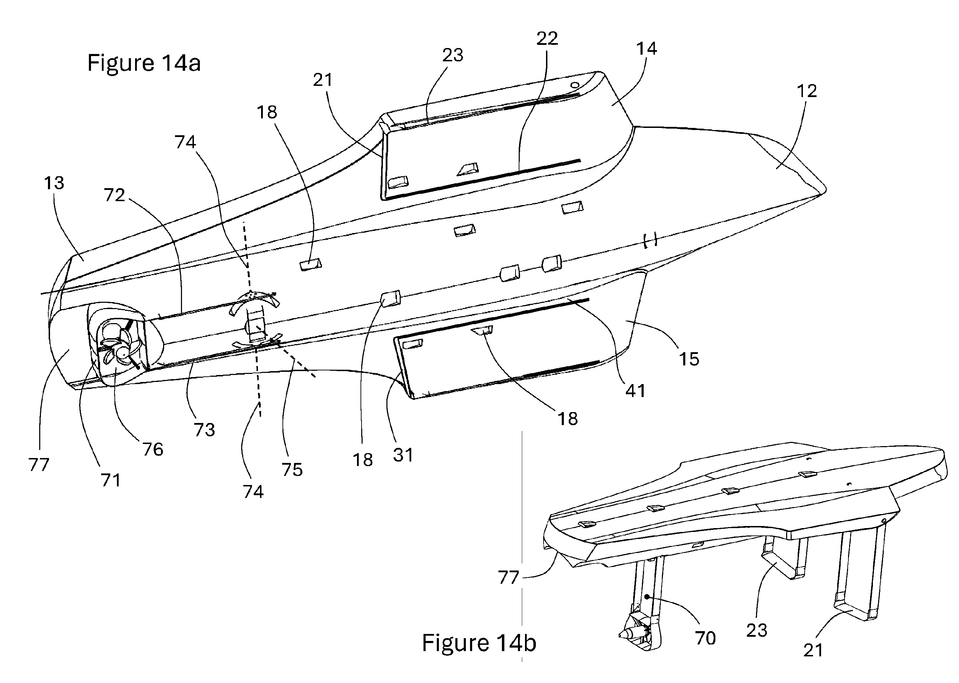

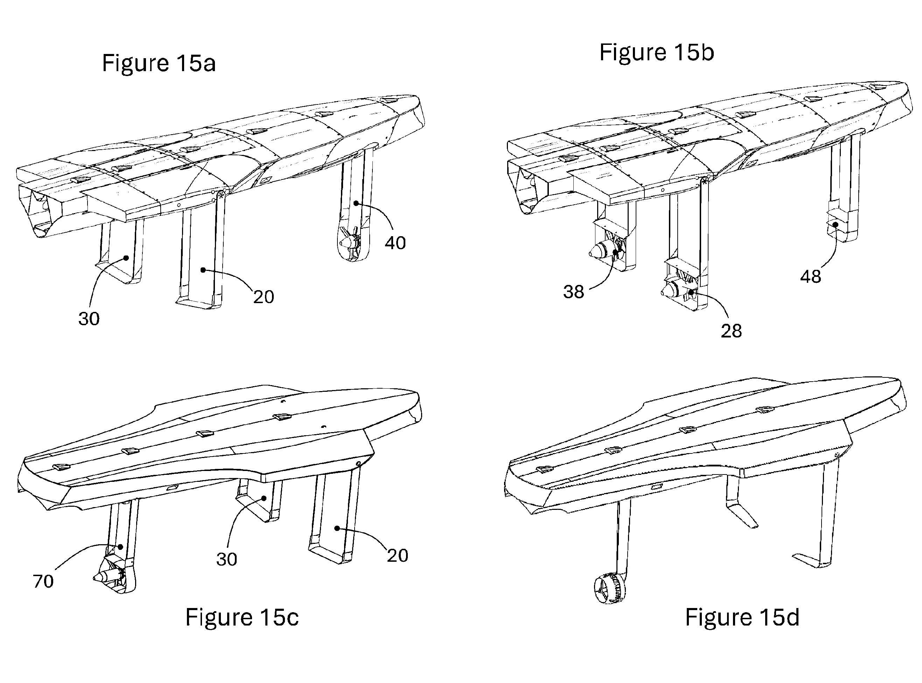

Alternative embodiments (shown in Figure 14 and 15) may have different foil configurations with right (20), left (30), and tail (70) foil assemblies but will otherwise operate and function in the same way.

Alternative embodiments may have right and left foil assemblies with integrated right and left thrusters (28 and 38) and no propulsion system in the front foil assembly. In such embodiments the hull will have two integrated scoops (not shown) for redirecting the thrust to propel the vessel forward in retracted mode.

As described earlier alternative embodiments may substitute the front foil with a Tail Foil Assembly (70) located at the stern (the aft end of the hull). The Tail Foil Assembly (70) typically includes a Tail Foil (71) with Right and Left Struts (72, 73), Tilting Axis (74), and Rotation Axis (75). The assembly incorporates a Tail Thruster (76) and the Hull (11) has a Tail Scoop (77) for efficient thrust redirection.

Each foil assembly is equipped with Release Mechanisms (81) designed to pivot the foils aft in the event of a collision with an obstacle (101). The mechanisms are resettable by rotating the foil assemblies to their aftmost position.

According to some embodiments of the present application, there may be four operational modes, namely a surface mode, a foiling mode, a submerged mode and a retracted mode.

In surface mode, the vessel operates with foil assemblies fully extended, providing stability and reduced drag. The hull (11) floats on the water surface (100), and propulsion is provided by thrusters (46 or 76). Alternatively, the vessel may utilize right and left foil assemblies (28, 38) with integrated thrusters.

In foiling mode, the hydrofoils lift the Hull (11) above the water surface (100), significantly reducing drag. The stabilization system, including an IMU (50), Height Sensors (51), and Servos (54), dynamically adjusts the angles of the foils to maintain balance and control.

For submerged operations, the Hull (11) is fully submerged below the water surface (100). Buoyancy is controlled by adjusting air and water flow through the Vents (17, 18). Transitions to and from submerged mode are achieved by adjusting foil angles and vessel speed to regulate the flow of air (61, 62) and water (63, 64).

In shallow waters or during docking, the foil assemblies may pivot aft, reducing the vessel's draft. In this retracted mode, the Thrusters (46 or 76) interact with the Scoop elements (78 or 77), directing thrust aft to propel the vessel efficiently. In this mode the main foils (21, 31) can be used as brakes by partially dropping them down from the fully retracted position (fully pivoted back) to increase drag. By partly dropping down either the right or the left foil, precise yaw control is achieved as long as the vessel maintains a minimum speed.

One of the key features of embodiments of the present application is the compact foil design. As already mentioned, all foil assemblies are narrower than half the width of the vessel, enabling streamlined operation and reduced interference during docking. Especially in retracted mode, as described below, the narrow foil assemblies are important. Another feature is the retractable foils. The foil assemblies can pivot back completely, ensuring they do not protrude deeper than the hull's lowest point.

When retracted (pivoted back) into the hull, the importance of the narrow foil assemblies as mentioned above becomes obvious. To reduce the draft as much as possible, to protect the foils and to reduce the drag in retracted mode, the foil assemblies typically swing into grooves or cutouts in the hull. By utilizing narrow foil assemblies, the size of the necessary cutouts is reduced allowing for a much stiffer and more robust hull design.

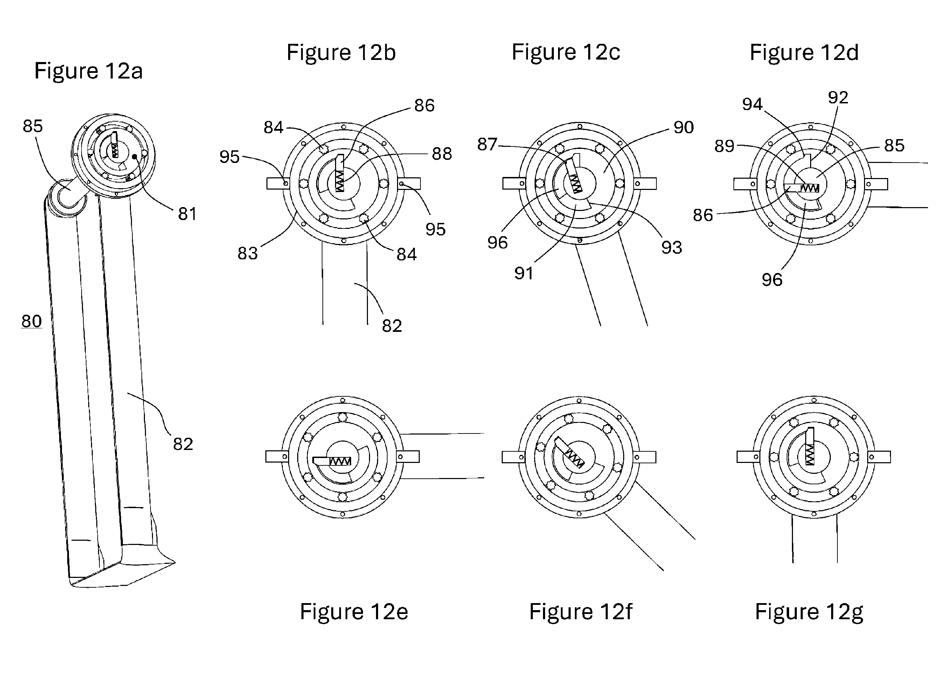

To protect the foils, a Release Mechanism (81) is shown in Figure 12. A Foil Assembly (80) with an integrated Servo Motor (83) allows the whole assembly to pivot aft upon impact with an object (101) for the purpose of collision protection. These mechanisms are resettable via a servo rotation. The sequence of a release and thereafter a rest action and the elements enabling these actions are shown in detail in Figure 12b to 12g.

The Release Mechanism (81) typically comprises a Servo Motor (83) that in the case of this alternative application is a ring-shaped motor placed around the Foil Tilting Shaft (85). The Servo Motor (83) has an internal Reduction Gear (84) driving the Servo Center (90). The Servo Center (90) is rotationally connected to the Tilting Shaft (85) and relative rotation between the Servo Center (90) and the Tilting Shaft (85) is locked by a Spring (88) loaded Locking Member (86) during normal operation. The Servo is furthermore fixed to the Hull (11) of the vessel through Servo Mounting Holes (95).

If the vessel hits an object in the water during normal operations (foiling) the force from the impact will be transferred via the Struts (82) to the Foil Tilting Shaft (85) and eventually, if the collision forces exceeding a predetermined threshold, cause the Locking Member (86) to be pressed back into the Shaft Grove (89) by the forces created between the Servo Groove Chamfer (94) and the Locking Member Chamfer (87). When the Locking Member (86) is fully depressed, the Foil Assembly (80) and the Tilting Shaft can swing back freely to allow the foil to pass over the obstacle.

In the case of a collision as described above the vessels control system will have to immediately stop the vessel since the lift from the affected foil assemblies will now be lost and continued foiling is impossible until the Release Mechanism (81) is reset. A first and a second End-stop (92, 93) interact with an Inner End (96) of the Tilting Shaft (85) to prevent rotations above the designed limits.

To reset the Release Mechanism the Servo Motor (83) via the Reduction Gear (84) rotates the Servo Center (90) to the aftmost position to allow the Locking Member (86) to snap back into place - forced into its original position by the Spring (88).

When the relative rotation between the Servo Center (90) and the inner end (96) of the Tilting Shaft (85) is locked by the Locking Member (86) the Foil Assembly (80) can be swung down into position for continued foiling. The control system may then accelerate the vessel and continue the travel in foiling mode.

Alternative embodiments may include different foil configurations and/or multiple hulls. Figure 15 shows four different foil and motor/propeller configurations that all operate essentially in the same way as the embodiment according to the present application.

In Figure 15a a foil configuration similar to the present application is shown, with a single foil comprising a motor and a propeller placed near the front part of the vessel and two U-shaped main foils (right and left) placed closer to the back end. Figure 15b shows a foil configuration with two motors/propellers (thrusters), one on each main foil. Each U-shaped main foil also comprises an extra foil above the thruster to increase the total foil area and lifting capacity. In this configuration the single front foil still provides yaw control, but at very low speeds extra yaw control may also come from differential thrust (from the two thrusters operating at different speed or directions). In Figure 15c the single front foil assembly with a thruster is substituted by a single tail foil assembly with a thruster and the main foil assemblies are moved forward. Finally, figure 15d shows a configuration quite similar to the one in 15c, but in this case the main foil assemblies are L-shaped to make the foil assemblies even simpler in design and the tail foil assembly with its thruster has a single strut.

The different foil assemblies may also include hydrofoils that are configured to alter the amount of lift by changing the shape of the foil or the incidence angle of the whole foil or only in dedicated parts of the hydrofoil.

According to embodiments of the present application, the vessel provided herein is suitable for various marine applications, including high-speed surface travel, covert underwater operations, and shallow water navigation. Its robust design and advanced stabilization systems make it ideal for both civilian and military use.

Embodiments according to the present application discussed herein, addresses the drawbacks of conventional hydrofoil systems by providing a highly adaptable and efficient vessel capable of operating in diverse environments while ensuring safety, stability, and operational precision.

## Claims

1. A vessel (10) for marine operations, including a vessel body (9) and a plurality of fully submerged hydrofoils (20, 30, 40) pivotly connected to the vessel body (9) with widths less than half the vessel body (9) width, capable of dynamic lift adjustments for attitude control, **characterized in**:
• one or more hulls (11) provided in the vessel body (9), having integrated scoop-element(s) to redirect thrust,
• one or more propulsion motors (46) with propellers (47) respectively positioned in the bottom end of one or more of the plurality of fully submerged hydrofoils (20, 30, 40) for generating thrust,
• a stabilization system including sensors (51, 52, 53) and servos (54, 55, 56) for real-time foil angle adjustments,
wherein the fully submerged hydrofoils (20, 30, 40) are configured to pivot aft, reducing draft and enabling thrust redirection via the scoop elements,
wherein the vessel (10) is operable in three distinct modes:
• a surface mode with extended foils at variable speeds,
• a foiling mode, foiling above the water surface, sustained by lift generated by the hydrofoils with the hull lifted above the water,
• a retracted mode, with the foil assemblies pivoted aft and where thrust is redirected by the scoop-element(s).

2. The vessel of claim 1, wherein the one or more hulls (11) comprise air and water vents (17, 18) for buoyancy control and where the vessel (10) is configurated to operate in:
• a submerged mode, submerged below the water surface (100) at lower speeds with the one or more hulls (11) filled with water,
and wherein transitions in and out of the submerged mode is achieved by at least dynamically adjusting the angles of the fully submerged hydrofoils (20, 30, 40) and adjusting the speed of the vessel (10) to control the passing of air and water in and out of said water and air vents (17, 18).

3. The vessel (10) of claim 1, **characterized in** the fully submerged hydrofoils (20, 30, 40)having a release mechanism that allow the hydrofoils (20, 30, 40) to quickly pivot back in the case of a collision with the ground or objects in the water, and where the release mechanism is adjusted to be re-set by rotating servos (54) into an aftmost position.

4. The vessel (10) of claim 1, **characterized in** the hydrofoils (20, 30, 40) adjusted to partly drop down from a retracted position to increase drag, and where directional (yaw) control thereby is provided by partly dropping down a left hydrofoil (31) to turn left and partly drop down a right hydrofoil (21) to turn right.

5. The vessel of claim 3, wherein the release mechanism further comprises a spring-loaded locking member engaging with a shaft groove on the foil tilting shaft during normal operation, and wherein the locking member is configured to disengage upon collision forces exceeding a predetermined threshold, allowing the hydrofoils (20, 30, 40) to pivot aft freely.

6. The vessel of claim 3, wherein the release mechanism includes a servo motor (54) with an internal reduction gear, and wherein the servo motor (54) is configured to rotate a servo center to an aftmost position after a collision, enabling the spring-loaded locking member to reengage with the shaft groove for resetting the release mechanism.

7. The vessel of claim 3, wherein the release mechanism incorporates a first and second end-stops interacting with an inner end of the foil tilting shaft, and wherein the end-stops are configured to limit the rotational movement of the foil assembly to predefined angles during collision and resetting operations.

8. A method of operating a vessel (10) for marine operations, **characterized in** the steps of:
• generating thrust using one or more propulsion motors (46)
• redirecting the thrust via integrated scoop elements in the hull (11)
• dynamically adjusting the angles of a plurality of fully submerged hydrofoils (20, 30, 40) arranged in foil assemblies with widths less than half the vessel width, to control lift and attitude and
• transitioning the vessel (10) between:
o a surface mode, wherein the hydrofoils (20, 30, 40) are extended and the vessel (10) operates at variable speeds
o a foiling mode, wherein the hydrofoils (20, 30, 40) lift the hull (11) above the water surface (100), and
o a retracted mode, wherein the foil assemblies are pivoted aft, reducing draft and enabling thrust redirection via the scoop elements.

9. The method of claim 8, further **characterized in** the additional steps of:
• controlling buoyancy by adjusting air and water flow through vents (17, 18) in the hull (11) and
• operating the vessel (10) in a submerged mode by filling the hull (11) with water and dynamically adjusting foil angles and vessel speed to regulate the transition to and from the submerged state.

10. The method of claim 8, **characterized in** the additional steps of:
• activating a release mechanism to allow a foil assembly to pivot aft upon encountering an obstacle and
• resetting the release mechanism by rotating an servo to an aftmost position, allowing the foil assembly to return to its operational configuration.

11. The method of claim 8, wherein directional control (yaw) is achieved by:
• operating the vessel (10) in retracted mode and
• partially dropping a left foil assembly (30) to create increased drag on the left side of the vessel (10), causing it to turn left and
• partially dropping a right foil assembly (20) to create increased drag on the right side of the vessel (10), causing it to turn right.

12. The method of claim 10, wherein the release mechanism includes:
• a spring-loaded locking member configured to engage with a shaft groove in the foil assembly during normal operation
• disengaging the locking member upon collision forces exceeding a predetermined threshold, allowing the foil assembly to pivot aft freely and
• reengaging the locking member by actuating a servo motor (54) to reset the foil assembly.

13. The method of claim 12, wherein the release mechanism further includes:
• first and second end-stops configured to limit the rotational movement of the foil assembly during collision and resetting operations.

14. The method of claim 8, wherein transitions in and out of the submerged mode are performed by:
• dynamically adjusting the angles of the foil assemblies to influence water flow
• modulating vessel speed to facilitate air and water exchange through the hull vents and
• controlling the amount of water retained within the hull (11) to manage buoyancy.
